# EUROPÄISCHE PATENTSCHRIFT

(11) **EP 0 879 627 B1**
(45) Veröffentlichungstag und Bekanntmachung des Hinweises auf die Patenterteilung: **17.04.2002**
(21) Anmeldenummer: 98890133.6
(22) Anmeldetag: 08.05.1998
(51) Int. Cl.: B01D 17/04, B01D 3/34, B01D 3/06, B01D 1/14, C02F 1/10

(54) **Verfahren und Vorrichtung zum Aufbereiten von Kondensat**
Condensate treatment process and apparatus
Procédé et dispositif de traitement de condensat

(30) Priorität: 20.05.1997 AT 85197
(43) Veröffentlichungstag der Anmeldung: 25.11.1998
(73) Patentinhaber: Ing. Michael Huemer TPH, 4081 Hartkirchen (AT)
(72) Erfinder: Huemer, Michael, Ing., 4081 Hartkirchen (AT)
(74) Vertreter: Hübscher, Gerhard, Dipl.-Ing.

(56) Entgegenhaltungen:
- DE-A- 4 116 412
- DE-A- 4 228 326
- FR-A- 2 663 038
- US-A- 4 104 112
- US-A- 4 178 202
- DATABASE WPI Section Ch, Week 8703 Derwent Publications Ltd., London, GB; Class D16, AN 87-017604 XP002076464 & JP 61 274 701 A (NAKAGAWA K)

## Beschreibung

Die Erfindung bezieht sich auf ein Verfahren zum Aufbereiten von in einer Druckluftanlage mit einem Kompressor anfallendem Kondensat, nach dem das der Druckluftanlage entnommene Kondensat einer Öl-Wasser-Trennung unterworfen wird, wozu der Wasseranteil des Kondensats durch Luftbeaufschlagung, mit über die Abwärme der Druckluftanlage vorgewärmter Luft verdunstet und kontinuierlich ins Freie abgeführt und das zurückbleibende Ölkonzentrat gesammelt und diskontinuierlich abgezogen wird, sowie auf eine Vorrichtung zur Durchführung dieses Verfahrens.

Beim Betrieb einer Druckluftanlage mit Kompressoren entsteht Kondensat mit einem erheblichen Öl- und Schmutzanteil, das wegen der geltenden Umweltbestimmungen nicht ohne ausreichende Aufbereitung in einen Abwasserkanal eingeleitet werden darf. Um das Entsorgen der gesamten Kondensatmenge als Sondermüll zu vermeiden, werden die ölhaltigen Kondensate aufbereitet, indem der Öl- und Schmutzanteil möglichst weitgehend vom Wasseranteil getrennt wird, was bisher neben einem schwerkraftsbedingten Trennen von Öl und Wasser vor allem durch Zugabe von chemischen Flockungsmitteln und anschließendem Trennen mittels Aktivkohle oder durch ein Filtrieren mittels Keramikmembranen erfolgt. Alle diese Verfahren sind allerdings verhältnismäßig aufwendig und erfordern oft nicht nur das spezielle Entsorgen des abgeschiedenen Ölanteils, sondern auch des noch einen übermäßigen Ölrestgehalt aufweisenden Wasseranteils.

Zur Entwässerung einer Öl-Wasser-Emulsion kann die Emulsion in einem Behälter fein zerstäubt und einer Strömung mit vorgewärmter Luft ausgesetzt werden (FR 2 663 038 A), wobei ein Wasseranteil verdampft und sich die übrige Emulsion am Behälterboden absetzt, von wo sie anschließend bei Bedarf abgepumpt wird. Aufgrund der feinen Zerstäubung läßt sich allerdings nicht vermeiden, daß der ausgeschiedene Wasseranteil noch einen erheblichen Ölanteil aufweist.

Aus der DE 42 28 326 A ist auch schon eine Öl-Wasser-Trennung durch ein Verdampfen des Wasseranteiles unter Luftbeaufschlagung bekannt, doch wird dabei das aus dem Kondensatfilter einer Kompressoreinheit anfallende Kondensat in einer Filtereinrichtung gesammelt und hier vom Filtermaterial aufgesaugt, das seinerseits von der zuvor aufgewärmten Luft beaufschlagt wird. Dadurch verdampft Wasser und Öl bleibt im Filtermaterial zurück, so daß die ölhaltigen Substanzen zusammen mit dem Filtermaterial zu entsorgen sind. Die Oberflächenvergrößerung des Kondensats auf Grund des Aufsaugens durch das Filtermaterial bleibt beschränkt und der zunehmende Gehalt der Ölsubstanzen im Filtermaterial behindert nach kurzer Betriebszeit das Aufsaugen, was ein häufiges Filterwechseln erfordert. Das Aufsaugen des Kondensats in ein Filtermaterial und das Ausdampfen des Wassers durch Luftbeaufschlagung des Filtermaterials stellt ein einstufiges Verfahren dar, das nur eine unwirtschaftliche Öl-Wasser-Trennung erlaubt.

Zur Verdampfung des Wasseranteiles eines wäßrigen Frostschutzmittels mit höherem Siedepunkt als Wasser ist es bekannt (US 4 104 112 A), das wäßrige Frostschutzmittel in einen Luftstrom einzusprühen und das Luft-Frostschutzmittelgemisch anschließend zuerst über Heizelemente und dann über einen Verdunstungskörper zu führen. Dabei verdampft aber nicht nur das im Frostschutzmittel enthaltene Wasser, sondern auch ein Teil des Frostschutzmittels, weshalb nach der Verdunstungseinrichtung noch eine Destilliereinheit vorgesehen werden muß, um den mit dem Wasser verdampften Frostschutzmittelanteil rückzugewinnen. Ein Entwässern einer organischen Flüssigkeit mit dieser Vorrichtung ist also mit einem erheblichen Aufwand verbunden.

Der Erfindung liegt daher die Aufgabe zugrunde, diese Mängel zu beseitigen und ein Verfahren der eingangs geschilderten Art anzugeben, das auf überraschend einfache und wirkungsvolle Weise eine Verbesserung der verdampfungsabhängigen Öl-Wasser-Trennung erlaubt. Außerdem soll eine zweckmäßige Vorrichtung zur Durchführung dieses Verfahrens geschaffen werden.

Die Erfindung löst diese Aufgabe dadurch, daß das Kondensat auf einen luftbeaufschlagbaren Verdunstungskörper aufgesprüht wird. Durch diese rationelle Maßnahme wird bereits beim Aufsprühen des Kondensats ein bestimmter Anteil des Wassers verdunstet und für den Rest werden wegen der großflächigen Verteilung am Verdunstungskörper günstigste Verdunstungsbedingungen geboten. Der Ölanteil bleibt am Verdunstungskörper haften, konzentriert und sammelt sich hier und wird entweder zusammen mit dem Verdunstungskörper abgenommen oder tropft vom Verdunstungskörper in eine geeignete Auffangschale ab und kann so entsorgt werden. Auf Grund der Abtropfmöglichkeit des zurückbleibenden Öls vom Verdunstungskörper kommt es dabei zu keiner Behinderung des Verdunstungsvorganges durch das sich absetzende Öl und das Entsorgen ist nicht vom Füllungsgrad eines Filter- oder Verdunstungskörpers, sondern vom Fassungsvermögen einer Auffangschale abhängig und somit in beliebig großen Zeitabständen durchzuführen. Außerdem läßt sich durch ein Hintereinanderreihen zweier oder mehrerer Verdunstungskörper auch ein mehrstufiges Aufbereitungsverfahren mit entsprechend hohem Abscheidegrad erreichen.

Dieses Aufbereitungsverfahren läßt sich mit sehr einfachen baulichen Einrichtungen verwirklichen, da grundsätzlich nur ein Aufnahmebehälter für das Kondensat und eine Luftbeaufschlagungseinrichtung für über die Abwärme der Druckluftanlage vorgewärmte Luft erforderlich sind. Eine besonders zweckmäßige Vorrichtung ergibt sich dabei, wenn ein Gehäuse als Trenneinrichtung einen von einem Zulufteinlaß zu einem Abluftauslaß verlaufenden Luftkanal bildet, der eine Sprüheinrichtung mit einem Anschluß für die Kondensatableitung aufnimmt, wobei der Sprüheinrichtung ein Verdunstungskörper nachgeordnet und unterhalb des Verdunstungskörpers eine Abtropfwanne vorgesehen ist. Ein solches Gehäuse ist ohne Schwierigkeiten im Bereich einer jeden Druckluftanlage zu installieren und mit seiner Sprüheinrichtung an die vorhandenen Kondensatableiter anzuschließen, wodurch das Kondensat über den Anlageninnendruck zur Sprüheinrichtung zugefördert und bei Anfall automatisch in den durch den Luftkanal strömenden Luftstrom eingesprüht wird. Der im Bereich der Sprühstrahlen vorgesehene Verdunstungskörper sammelt das zurückbleibende Ölkonzentrat und hilft, den restlichen Wasseranteil durch die Verteilung an der Oberfläche zu verdunsten, so daß die Feuchtigkeitsabfuhr mit der den Luftkanal durchströmenden Luft erfolgt. Das sich an den Verdunstungskörpem anlegende Ölkonzentrat wird entweder in Abhängigkeit von den Körpereigenschaften im Verdunstungskörper aufgenommen und gespeichert oder tropft vom Verdunstungskörper in die Abtropfwanne, von wo es periodisch abgezogen oder mit dem Austausch der Verdunstungskörper entsorgt wird. Selbstverständlich können je nach Kondensatanfall auch mehrere Verdunstungskörper nebeneinander oder in Serie hintereinander angeordnet werden und zusätzlich können in den Luftkanal auch Umlenkungen, Luftreiniger, Ölabscheider od. dgl. eingebaut sein. Vorteilhaft ist es, wenn der Verdunstungskörper eine eine möglichst große spezifische Oberfläche ergebende Struktur besitzt oder aus einem speziellen ölbindenden Material besteht, wozu der Verdunstungskörper wenigstens eine Matte aus einem Kunstfaservlies umfaßt. Diese Matten sind luftdurchlässig, besitzen eine große Saugfähigkeit, erhöhen den Strömungswiderstand im Luftkanal nur wenig und bringen eine verhältnismäßig lange Standzeit mit sich. Speziell eignet sich ein kunstharzgebundenes Vlies aus Polyesterfasern oder ein Vlies aus Viskose und Polypropylenfasem, wobei durch die verhältnismäßig geringe Bindung des Fasermaterials zum Öl schwerkraftsbedingt eine gewisse Selbstreinigung erfolgt und die Lebensdauer erhöht wird.

Zur Luftbeaufschlagung der Trenneinrichtung läßt sich das Gehäuse unterschiedlich einsetzen und mit Luft versorgen. Eine Möglichkeit besteht darin, daß der gegebenenfalls mit einem Ventilator bestückte Zulufteinlaß in einem die Druckluftanlage aufnehmenden Maschinenraum angeordnet ist. Hier wird die freie, durch den Kompressor und die anderen Einrichtungen der Druckluftanlage erwärmte Raumluft zum Verdunsten des Kondensats herangezogen, was nicht nur energiesparend ist, sondern auch eine gewisse klimatisierende Wirkung auf den Maschinenraum ausübt. Es brauchen sich dazu lediglich der Zulufteinlaß in den Maschinenraum zu öffnen und der Abluftauslaß ins Freie gerichtet zu sein.

Eine weitere Möglichkeit ergibt sich dadurch, daß Zulufteinlaß und Abluftauslaß in den fortluftseitigen Abschnitt eines Luftkühlungssystems, vorzugsweise für eine Druckluftanlage, eingebunden sind. Mit dieser Art Parallelschaltung zu einem Lüftungssystem kann ohne eigenen Ventilator ein Teil der bereits erwärmten Kühlluft zur Verdunstung des Kondensats herangezogen werden, wobei durch entsprechende Steuerklappen die Beaufschlagungsluftmenge dosierbar bleibt.

Ist ein liegendes rohrförmiges Gehäuse vorgesehen, das mit seinem Mantel den Luftkanal und mit seinen Stirnseiten den Zuluftein- und Abluftauslaß bildet, wobei im Deckenbereich die Sprüheinrichtung, im Bodenbereich die Abtropfwanne und im Zwischenbereich axial ausgerichtete Verdunstungskörper-Matten angeordnet sind, entsteht eine recht kompakte Vorrichtung, die sich unmittelbar in einen Luftkanal integrieren läßt und ohne größeren Mehraufwand und Platzbedarf installiert werden kann.

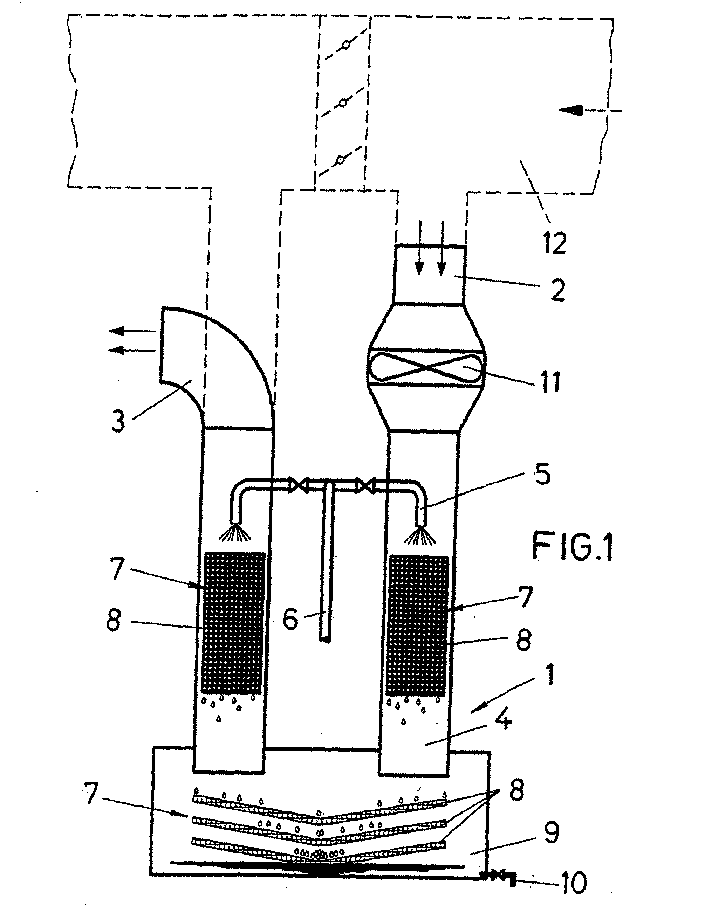

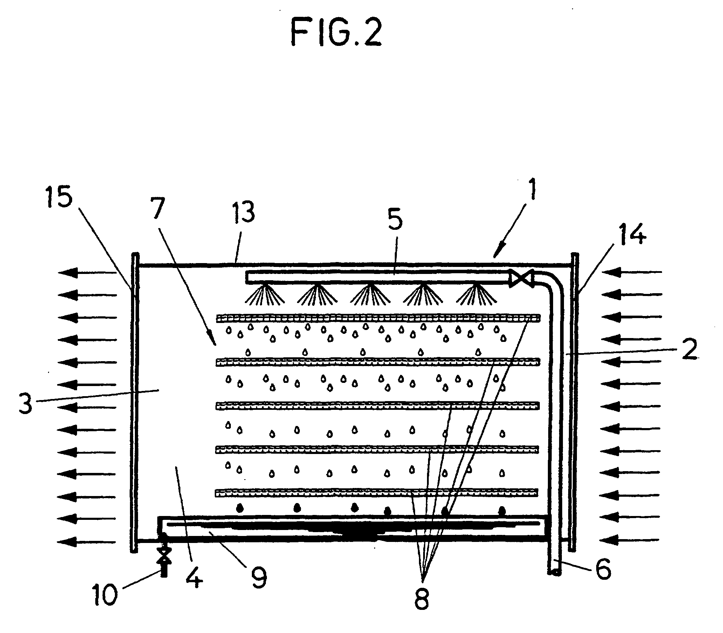

In der Zeichnung ist der Erfindungsgegenstand näher veranschaulicht, und zwar zeigen
Fig. 1 und 2 zwei Ausführungsbeispiele einer erfindungsgemäßen Kondensataufbereitungsvorrichtung jeweils im Anlagenschema.

Um ölhaltiges Kondensat, wie es in Druckluftanlagen anfällt, rationell aufbereiten zu können, wird der Wasseranteil des Kondensats durch Luftbeaufschlagung verdunstet. Dazu gibt es ein Gehäuse 1, das einen von einem Zulufteinlaß 2 zu einem Abluftauslaß 3 verlaufenden Luftkanal 4 bildet, der eine Sprüheinrichtung 5 mit einem Anschluß 6 für eine nicht weiter dargestellte Kondensatableitung aufnimmt. Der Sprüheinrichtung 5 sind Verdunstungskörper 7 aus porösem oder faserigem Material, beispielsweise Matten 8 aus einem Kunstfaservlies nachgeordnet, unterhalb welcher Verdunstungskörper 7 eine Abtropfwanne 9 mit einem Konzentratauslaß 10 vorgesehen ist. Zur Kondensataufbereitung wird das Kondensat im Maße seines Anfalles über die Sprüheinrichtung 5 in den durch den Luftkanal 4 geführten Luftstrom eingesprüht, wobei der Wasseranteil weitgehend verdunstet und mit der Luft ins Freie abgeführt wird. Der Kondensatrest ergibt in Abhängigkeit vom Verdunstungsgrad ein Ölkonzentrat, das sich am Verdunstungskörper 7 bzw. in den Kunstfaservliesmatten 8 ansammelt. Bei ölabweisenden Fasereigenschaften tropft das Konzentrat von den Verdunstungskörpem 7 ab und gelangt stufenweise in die Abtropfwanne 9, von wo es periodisch abgezogen und entsorgt wird.

Um den Verdunstungseffekt zu steigern, wird üblicherweise vorgewärmte Luft zur Verdunstung herangezogen, wobei zur Vorwärmung die Abwärme der Druckluftanlage genutzt wird. Dazu läßt sich, wie in Fig. 1 angedeutet, der Zulufteinlaß 2 einfach im Maschinenraum einer Druckluftanlage anordnen und die warme Luft gegebenenfalls über ein Fördergebläse 11 in den Luftkanal 4 blasen. Die befeuchtete Abluft braucht dann lediglich über einen ins Freie führenden Abluftauslaß 3 abgeführt zu werden und es kommt zu einer einfachen und zweckmäßigen Kondensataufbereitung. Wie strichliert angedeutet, könnten der Zulufteinlaß 2 und der Abluftauslaß 3 auch in das Leitungssystem 12 einer nicht weiter dargestellten Lüftungseinrichtung der Druckluftanlage oder auch in einen Druckluftkanal eingebunden werden, so daß ohne eigenen Ventilator das Auslangen gefunden wird und die durch den Kühlungsvorgang erwärmte Kühlluft zur Kondensataufbereitung nutzbar ist.

Wie in Fig. 2 veranschaulicht, kann auch ein liegendes rohrförmiges Gehäuse 1 Verwendung finden, das mit seinem Mantel 13 den Luftkanal 4 und mit seinen Stirnseiten 14, 15 den Zuluftein- und Abluftauslaß 2, 3 bildet, so daß sich dieses Gehäuse 1 unmittelbar in eine Rohrleitung od. dgl. eines Luftführungssystems einsetzen läßt. Hier ist die Sprüheinrichtung 5 im Deckenbereich des Gehäuses 1 angeordnet, die Abtropfwanne 9 befindet sich im Bodenbereich und im Zwischenbereich sind die axial ausgerichteten Matten 8 des Verdunstungskörpers 7 vorgesehen.

Das erfindungsgemäße Verfahren erlaubt auf überraschend einfache und energiesparende Weise eine hochgradige Aufbereitung des ölhaltigen Kondensats und läßt sich durch seine vielfältige Ausführbarkeit an die unterschiedlichsten Gegebenheiten bestens anpassen.

## Patentansprüche

1. Verfahren zum Aufbereiten von in einer Druckluftanlage mit Kompressor anfallendem Kondensat, nach dem das der Druckluftanlage entnommene Kondensat einer Öl-Wasser-Trennung unterworfen wird, wozu der Wasseranteil des Kondensats durch Luftbeaufschlagung mit über die Abwärme der Druckluftanlage vorgewärmter Luft verdunstet und kontinuierlich ins Freie abgeführt und das zurückbleibende Ölkonzentrat gesammelt und diskontinuierlich abgezogen wird, **dadurch gekennzeichnet, daß** das Kondensat auf einen luftbeaufschlagbaren Verdunstungskörper aufgesprüht wird.

2. Vorrichtung zur Durchführung des Verfahrens nach Anspruch 1, mit einem eine Trenneinrichtung aufweisenden, an eine Kondensatableitung einer Druckluftanlage anschließbaren Gehäuse, das von über die Abwärme der Druckluftanlage vorgewärmter Luft durchströmt ist, **dadurch gekennzeichnet, daß** das Gehäuse (1) als Trenneinrichtung einen von einem Zulufteinlaß (2) zu einem Abluftauslaß (3) verlaufenden Luftkanal (4) bildet, der eine Sprüheinrichtung (5) mit einem Anschluß (6) für die Kondensatableitung aufnimmt, wobei der Sprüheinrichtung (5) wenigstens ein Verdunstungskörper (7) nachgeordnet und unterhalb des Verdunstungskörpers eine Abtropfwanne (9) vorgesehen ist, und daß der Verdunstungskörper (7) wenigstens eine Matte (8) aus einem Kunstfaservlies umfaßt.

3. Vorrichtung nach Anspruch 2, **dadurch gekennzeichnet, daß** der mit einem Ventilator (11) bestückte Zulufteinlaß (2) in einem die Druckluftanlage aufnehmenden Maschinenraum angeordnet ist.

4. Vorrichtung nach Anspruch 2, **dadurch gekennzeichnet, daß** Zulufteinlaß (2) und Abluftauslaß (3) in den fortluftseitigen Abschnitt eines Luftkühlungssystems (12) eingebunden sind.

5. Vorrichtung nach Anspruch 4, **dadurch gekennzeichnet, daß** ein liegendes rohrförmiges Gehäuse (1) vorgesehen ist, das mit seinem Mantel (13) den Luftkanal (4) und mit seinen Stirnseiten (14, 15) den Zuluftein- und Abluftauslaß (2, 3) bildet, wobei im Deckenbereich die Sprüheinrichtung (5), im Bodenbereich die Abtropfwanne (9) und im Zwischenbereich axial ausgerichtete Verdunstungskörper-Matten (8) angeordnet sind.

## Claims

1. A method of processing condensate occurring in a compressed air plant with a compressor, wherein the condensate taken from the compressed air plant is subjected to oil-water separation, for which purpose the water component of the condensate evaporates by being subjected to air preheated by means of the waste heat of the compressed air plant and is continuously discharged into the atmosphere and the remaining oil concentrate is collected and is drawn off discontinuously, **characterised in that** the condensate is sprayed on to an evaporating element which can be subjected to an air flow.

2. Apparatus for performing the method according to claim 1, comprising a housing which has a separating device and which is adapted to be connected to a condensate discharge line of a compressed air plant, air preheated by means of the waste heat of the compressed air plant flowing through said housing, **characterised in that** the housing (1) as a separating device forms an air duct (4) which extends from an incoming air inlet (2) to an outgoing air outlet (3) and which contains a spraying device (5) with a connection (6) for the condensate discharge line, the spraying device (5) being followed by at least one evaporating element (7) and a drip tray (9) is provided beneath the evaporating element, and **in that** the evaporating element (7) comprises at least one mat (8) of a synthetic fibre nonwoven.

3. Apparatus according to claim 2, **characterised in that** the incoming air inlet (2), which is provided with a fan (11), is disposed in a machine room accommodating the compressed air plant.

4. Apparatus according to claim 2, **characterised in that** the incoming air inlet (2) and the outgoing air outlet (3) are integrated in the exhaust portion of an air cooling system (12).

5. Apparatus according to claim 4, **characterised in that** a horizontal tubular housing (1) is provided, the outer surface (13) of which forms the air duct (4) and the endfaces (14, 15) of which form the incoming air inlet and the outgoing air outlet (2, 3), the spraying device (5) being provided in the ceiling zone and the drip tray (9) being provided in the bottom zone and axially aligned evaporating element mats (8) are disposed in the intermediate zone.

## Revendications

1. Procédé de préparation d'un condensat, produit dans une installation de production d'air comprimé équipée d'un compresseur, selon lequel le condenseur prélevé de l'installation de production d'air comprimé est soumis à une séparation huile-eau, faisant que la fraction aqueuse du condensat est évaporée par exposition à l'air, en utilisant l'air préchauffé par l'intermédiaire de la chaleur évacuée par l'installation d'air comprimé, et est évacuée de façon continue à l'air libre, et le concentrat huileux restant est collecté et extrait de façon discontinue, **caractérisé en ce que** le condensat est appliqué par pulvérisation sur un corps d'évaporation pouvant être exposé à l'air.

2. Dispositif de mise en oeuvre du procédé selon la revendication 1, avec un carter présentant un dispositif séparateur, carter pouvant être raccordé à une conduite d'évacuation de condensat appartenant à une installation de production d'air comprimé, le carter étant traversé par un écoulement d'air préchauffé par utilisation des pertes thermiques de l'installation de production d'air comprimé, **caractérisé en ce que** le carter (1) forme, à titre de dispositif séparateur, un canal d'air (4) s'étendant d'une introduction d'amenée d'air (2) vers un échappement d'évacuation d'air (3), canal recevant un dispositif de pulvérisation (5) avec un raccordement (6) pour la conduite d'évacuation de condensat, en aval du dispositif de pulvérisation (5) étant installé au moins un corps d'évaporation (7) et, au-dessous du corps d'évaporation, est prévu un bac d'égouttement (9), et **en ce que** le corps d'évaporation (7) comprend au moins un matelas (8) réalisé à partir d'un matelas de fibres synthétiques.

3. Dispositif selon la revendication 2, **caractérisé en ce que** l'entrée d'admission d'air (3) munie d'un ventilateur (11) est disposé dans un local machine recevant l'installation de production d'air comprimé.

4. Dispositif selon la revendication 2, **caractérisé en ce que** l'entrée d'amenée d'air (2) et la sortie d'évacuation d'air (3) sont intégrées dans le tronçon fixé côté transport d'air d'un système de refroidissement d'air (12).

5. Dispositif selon la revendication 4, **caractérisé en ce qu'**un carter (1) tubulaire horizontal est prévu, qui forme, avec son enveloppe (13), le canal à air (4) et, avec ses faces frontales (14, 15), l'entrée d'amenée d'air et la sortie d'évacuation d'air (2, 3), dans la zone de plafond étant disposé le dispositif de pulvérisation (5), dans la zone de fond étant disposé le bac d'égouttement (9), et dans la zone intermédiaire étant disposés des matelas en corps d'évaporation (8), orientés axialement.
